(19) **Europäisches Patentamt** / **European Patent Office** / **Office européen des brevets**

(11) **EP 1 978 733 A2**

(12) **EUROPÄISCHE PATENTANMELDUNG**

(43) Veröffentlichungstag:
08.10.2008 Patentblatt 2008/41

(51) Int Cl.:
*H04N 5/44* (2006.01)

(21) Anmeldenummer: 08006669.9

(22) Anmeldetag: 01.04.2008

(84) Benannte Vertragsstaaten:
AT BE BG CH CY CZ DE DK EE ES FI FR GB GR HR HU IE IS IT LI LT LU LV MC MT NL NO PL PT RO SE SI SK TR
Benannte Erstreckungsstaaten:
AL BA MK RS

(30) Priorität: 05.04.2007 DE 102007016596

(71) Anmelder: Micronas GmbH
79108 Freiburg (DE)

(72) Erfinder:
• **Hahn, Marko**
**85579 Neubiberg (DE)**

• **Tuschen, Christian**
**80687 München (DE)**
• **Scheffler, Günter**
**80939 München (DE)**
• **Schu, Markus**
**85435 Erding (DE)**

(74) Vertreter: **Patentanwälte**
**Westphal, Mussgnug & Partner**
**Herzog-Wilhelm-Strasse 26**
**80331 München (DE)**

(54) **Verfahren zur Detektion von Bildsequenzen mit zeilenweise wiederholten Daten**

(57) Beschrieben wird ein Verfahren zur Detektion eines Bildsignals, das eine Bildsequenz repräsentiert und das zeilenweise wiederholte Bilddaten aufweist, wobei das Verfahren für mehrere aufeinanderfolge Bilder die Verfahrensschritte aufweist:
Auswählen mehrerer Zeilengruppen mit jeweils einer ersten, einer zweiten und einer dritten Zeile, die bei einer Halbbildfolge zwei aufeinanderfolgenden Halbbildern und bei einer Vollbildfolge einem Halbbild entstammen, für jede Zeilengruppe: Ermitteln eines ersten Zeilenabstandsmaßes für einen Unterschied zwischen Bildinhalten der ersten und der zweiten Zeile und eines zweiten Zeilenabstandsmaßes für einen Unterschied zwischen Bildinhalten der zweiten und der dritten Zeile,
Auswerten des ersten und des zweiten Zeilenabstandsmaßes im Hinblick auf das Vorliegen eines signifikanten Unterschieds zwischen diesen Zeilenabstandsmaßen.

FIG 1

## Beschreibung

Die Erfindung betrifft ein Verfahren zur Verarbeitung von Bildsignalen, die eine Sequenz von Bildern repräsentieren, in denen zwei benachbarte Bildzeilen jeweils identische Bildinhalte aufweisen.

Solche Bildsequenzen werden beispielsweise dadurch erhalten, dass in einer 50-Hz-Halbbildfolge, wie sie in der Fernsehtechnik üblich ist, jedes 2. Halbbild verworfen und stattdessen der Inhalt des vorherigen Halbbildes lediglich zeilenversetzt (interlaced) wiedergegeben wird. Benachbarte Zeilen zweier aufeinanderfolgender Halbbilder besitzen dadurch identische Bildinhalte. Die Folge ist, dass Szenen die mit einer Bildfolge von 50 Hz aufgenommen wurden, effektiv nur mit einer Bildfolge von 25 Hz wiedergegeben werden und dass die vertikale Auflösung reduziert ist. Dies macht sich für einen Betrachter besonders auf großformatigen Anzeigevorrichtungen (Displays) in Form von Stufeneffekten oder einem Flimmern entlang von schräg in dem Bild verlaufenden Kanten unangenehm bemerkbar.

Durch geeignete, empfängerseitig angewendete Bildverarbeitungsverfahren können solche Artefakte zumindest verringert werden, was allerdings voraussetzt, dass solche Bildsignale bzw. Bildsequenzen mit zeilenweise wiederholten Daten als solche erkannt werden, zumal diese durch die Programmanbieter nicht besonders gekennzeichnet werden.

Aufgabe der vorliegenden Erfindung ist, es ein Verfahren zur Detektion von Bildsequenzen mit zeilenweise wiederholten Bilddaten zur Verfügung zu stellen.

Diese Aufgabe wird durch Verfahren nach den Ansprüchen 1 und 2 gelöst. Weiterbildungen der Erfindung sind Gegenstand der Unteransprüche.

Ein erstes Ausführungsbeispiel des erfindungsgemäßen Verfahrens betrifft die Detektion eines Bildsignals, das eine Halbbildsequenz mit zeilenweise aufgebauten Halbbildern repräsentiert und das zeilenweise wiederholte Bilddaten aufweist. Dieses Verfahren umfasst für mehrere aufeinanderfolge Halbbilder jeweils die Verfahrensschritte:

- Auswählen mehrerer Zeilengruppen mit jeweils einer ersten, und einer dritten Zeile, die in einer vorgegebenen Bildrichtung unmittelbar aufeinanderfolgend in dem Halbbild angeordnet sind, und mit jeweils einer zweiten Zeile, die in einem zeitlich unmittelbar benachbarten Halbbild an einer Position zwischen der ersten und dritten Zeile angeordnet ist,

- für jede Zeilengruppe: Ermitteln eines ersten Maßes für einen Unterschied zwischen Bildinhalten der ersten und der zweiten Zeile und eines zweiten Maßes für einen Unterschied zwischen Bildinhalten der zweiten und der dritten Zeile,

- Addieren der ersten Maße, um eine erste Summe zu erhalten und Addieren der zweiten Maße, um eine zweite Summe zu erhalten,

- Vergleichen des ersten und des zweiten Maßes und Erzeugen eines von dem Vergleich abhängigen ersten Detektionssignals.

Auf eine mehrere erste Detektionssignale aufweisende Signalfolge wird hierbei eine Mustererkennung angewendet, wobei man sich zu Nutze macht, dass bei Halbbildsequenzen mit zeilenweise wiederholten Bilddaten die ersten Detektionssignale sich von Halbbild zu Halbbild erheblich ändern.

Ein zweites Ausführungsbeispiel des erfindungsgemäßen Verfahrens betrifft ein Verfahren zur Detektion eines Bildsignals, das eine Bildsequenz mit zeilenweise aufgebauten Vollbildern repräsentiert und das zeilenweise wiederholte Bilddaten aufweist. Dieses Verfahren unterscheidet sich von dem zuvor erläuterten, auf Halbbildfolgen anwendbaren Verfahren nur dadurch, dass die drei Zeilen einer Zeilengruppe einem Bild und nicht zwei zeitlich unmittelbar benachbarten Halbbildern entstammen.

Im Zusammenhang mit der Erfindung bezeichnet "Bildinhalt einer Zeile oder eines Zeilenabschnitts" die Gesamtheit der Bildinformationswerte, die den Bildpunkten der Zeile oder des Zeilenabschnitts zugeordnet sind. Bildinformationswerte können dabei Helligkeitswerte (Luminanzwerte) oder Farbkontrastwert (Chrominanzwerte) sein.

Ausführungsbeispiele der vorliegenden Erfindung werden nachfolgend anhand von Figuren näher erläutert.

Figur 1     zeigt schematisch eine Halbbildfolge mit zeilenweise wiederholten Bilddaten.

Figur 2     zeigt schematisch eine Vollbildfolge mit zeilenweise wiederholten Bilddaten.

Figur 3     veranschaulicht die Auswahl von Bildzeilen einer Halbbildfolge (Figur 3A) und einer Vollbildfolge (Figur 3B) zur Durchführung des erfindungsgemäßen Verfahrens.

Figur 4    veranschaulicht ein Ausführungsbeispiel des erfindungsgemäßen Verfahrens anhand einer zur Durchführung des Verfahrens geeigneten Vorrichtung.

Figur 5    zeigt ein Ausführungsbeispiel einer Auswerteschaltung der in Figur 4 dargestellten Vorrichtung.

In den Figuren bezeichnen, sofern nicht anders angegeben, gleiche Bezugszeichen gleiche Signale und gleiche Vorrichtungskomponenten mit gleicher Bedeutung.

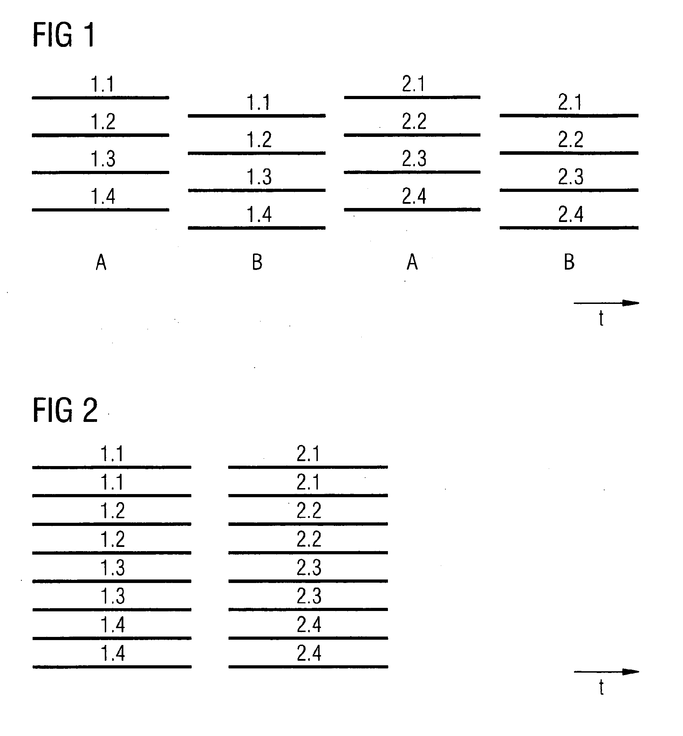

Figur 1 zeigt schematisch eine Halbbildfolge mit zeilenverkämmten Halbbildern, also eine Halbbildfolge, bei der zwei zeitlich unmittelbar aufeinanderfolgende Halbbilder unterschiedliche Rasterlagen besitzen. Die unterschiedlichen Rasterlagen sind in Figur 1 mit A und B bezeichnet, wobei die Rasterlage A beispielsweise die Halbbilder mit ungeradzahligen Zeilen und die Rasterlage B die Halbbilder mit geradzahligen Zeilen bezeichnet. Die einzelnen Bildzeilen, die in Figur 1 lediglich in Form von Strichen schematisch dargestellt sind, enthalten jeweils eine Anzahl von Bildpunkten, denen Bildinformationswerte, beispielsweise Luminanzwerte oder Chrominanzwerte, zugeordnet sind. Die Bildzeilen, in denen Bildpunkten in einem Halbbild Bildinformationswerte zugeordnet sind, enthalten im jeweils zeitlich unmittelbar benachbarten Halbbild keine Bildinformationswerte. Bildinhalte der einzelnen Zeilen ergeben sich aus der Gesamtheit der den einzelnen Bildpunkten der jeweiligen Zeile zugeordneten Bildinformationswerte.

Bei der in Figur 1 dargestellten Halbbildfolge sind Bildinhalte der einzelnen Zeilen derart wiederholt enthalten, dass jeweils zwei aufeinanderfolgende Halbbilder Bildzeilen mit jeweils gleichen Bildinhalten enthalten. Betrachtet man beispielsweise die Halbbilder mit der Rasterlage A, so entsprechen die Bildinhalte der Bildzeilen dieser Halbbilder den Bildinhalten der Bildzeilen der jeweils zeitlich darauffolgenden Halbbilder mit der Rasterlage B. Mit anderen Worten: der Bildinhalt einer Bildzeile eines Halbbildes der Rasterlage A entspricht dem Bildinhalt in der jeweils nächsten Bildzeile des darauffolgenden Halbbildes der Rasterlage B. Eine solche Halbbildfolge wird nachfolgend als Halbbildfolge mit zeilenweise wiederholten Bilddaten bezeichnet.

Derartige Halbbildfolgen mit zeilenweise wiederholten Bilddaten können beispielsweise dadurch erzeugt werden, dass mit einer Videokamera Halbbilder mit einer Halbbildfrequenz von 50 Hz aufgenommen werden, dass jedes zweite Halbbild verworfen wird und dass die verbleibenden Halbbilder mit versetzten Rasterlagen zweimal aufeinanderfolgend wiedergegeben werden. Die effektive Halbbildfrequenz beträgt durch Verwerfen jedes zweiten Bildes allerdings nur noch 25 Hz, wodurch ein Betrachter einer solchen Halbbildfolge Ruckeleffekte wahrnimmt.

Figur 2 zeigt schematisch eine Vollbildfolge mit zeilenweise wiederholten Bilddaten. Innerhalb eines zeilenweise aufgebauten Bildes weisen jeweils zwei benachbarte Bildzeilen hierbei gleiche Bildinhalte auf. In diesem Zusammenhang sei darauf hingewiesen, dass in den Figuren 1 und 2 zu Zwecken der Erläuterung die Bildinhalte der einzelnen Zeilen durch Ziffernfolgen bezeichnet sind, wobei gleiche Ziffernfolgen gleiche Bildinhalte repräsentieren.

Eine Vollbildfolge gemäß Figur 2 mit zeilenweise wiederholten Bilddaten kann mittels hinlänglich bekannter Deinterlacing-Verfahren beispielsweise aus der in Figur 1 dargestellten Halbbildfolge mit zeilenweise wiederholten Bilddaten hergestellt werden.

Die zuvor erläuterten Artefakte, die durch eine Reduktion der zeitlichen Auflösung, d. h. durch Löschen jedes zweiten Halbbildes der Halbbildfolge, oder durch Reduktion der räumlichen Auflösung, d. h. durch wiederholtes Wiedergeben des Bildinhaltes einer Bildzeile in zwei aufeinanderfolgenden Zeilen, entstehen, können durch Interpolationsverfahren reduziert werden. Dies setzt allerdings voraus, dass Bildsignale, die solche Halbbildfolgen oder Vollbildfolgen mit zeilenweise wiederholten Bilddaten repräsentieren, als solche erkannt werden. Ein Verfahren zur Erkennung bzw. Detektion solcher Bildsignale wird nachfolgend erläutert.

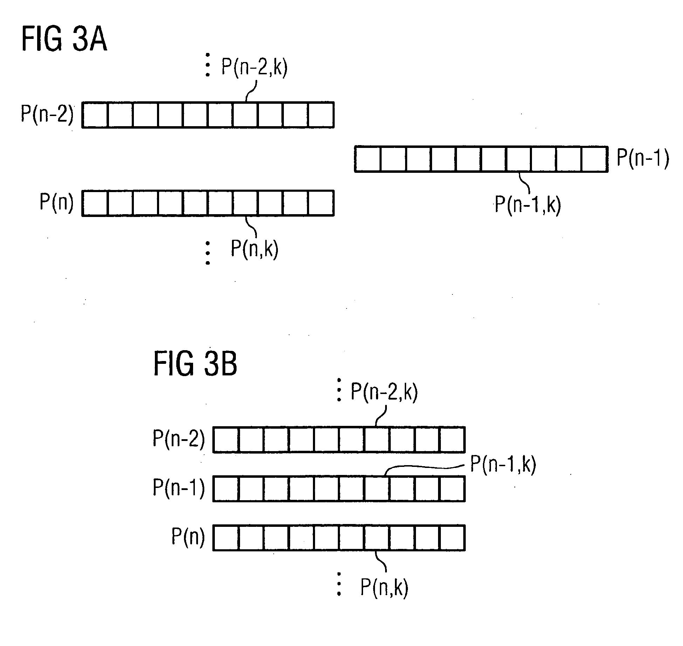

Das Verfahren sieht zunächst vor, mehrere Zeilengruppen mit jeweils einer ersten, einer zweiten und einer dritten Zeile auszuwählen und Bildinhalte dieser Zeilen in noch zu erläuternder Weise miteinander zu vergleichen. Die Auswahl dieser Zeilengruppen erfolgt für Halbbildfolgen und für Vollbildfolgen auf unterschiedliche Weise, wie nachfolgend anhand der Figuren 3A und 3B erläutert wird.

Bezug nehmend auf Figur 3A umfasst bei einer Halbbildfolge eine Zeilengruppe zwei in einem Halbbild einer Rasterlage unmittelbar benachbarte Zeilen P(n-1), P(n), die nachfolgend als erste und dritte Bildzeilen bezeichnet werden, und eine in einem zeitlich unmittelbar benachbarten Halbbild an einer Zeilenposition zwischen der ersten und dritten Bildzeile angeordnete zweite Bildzeile P(n-1). Bei einer Vollbildfolge umfasst eine Zeilengruppe Bezug nehmend auf Figur 3B drei in einem Vollbild unmittelbar benachbarte Zeilen P(n-2), P(n-1), P(n), die nachfolgend als erste, zweite und dritte Zeile bezeichnet werden. Soweit nichts anderes angegeben ist, gelten die nachfolgenden Ausführungen zur Bearbeitung der Zeilengruppen unabhängig davon, ob diese Zeilengruppen einer Halbbildfolge oder einer Vollbildfolge entstammen.

Die einzelnen Bildzeilen umfassen jeweils eine Anzahl von Bildpunkten, was in den Figuren 3A und 3B schematisch dargestellt ist. Den einzelnen Bildpunkten ist hierbei jeweils wenigstens ein Bildinformationswert, beispielsweise ein Luminanzwert und zwei Chrominanzwerte, zugeordnet. Das nachfolgend erläuterte Detektionsverfahren verwendet beispielsweise nur einen dieser Bildinformationswerte, beispielsweise den Luminanzwert, zur Detektion des Vorliegens eines Bildsignals mit zeilenweise wiederholten Bilddaten. Die den einzelnen Bildpunkten zugeordneten Bildinformationswerte werden nachfolgend mit P(x,y) bezeichnet, wobei x die Position der Zeile innerhalb des Bildes und y die Position des Bildpunktes innerhalb der Zeile bezeichnet.

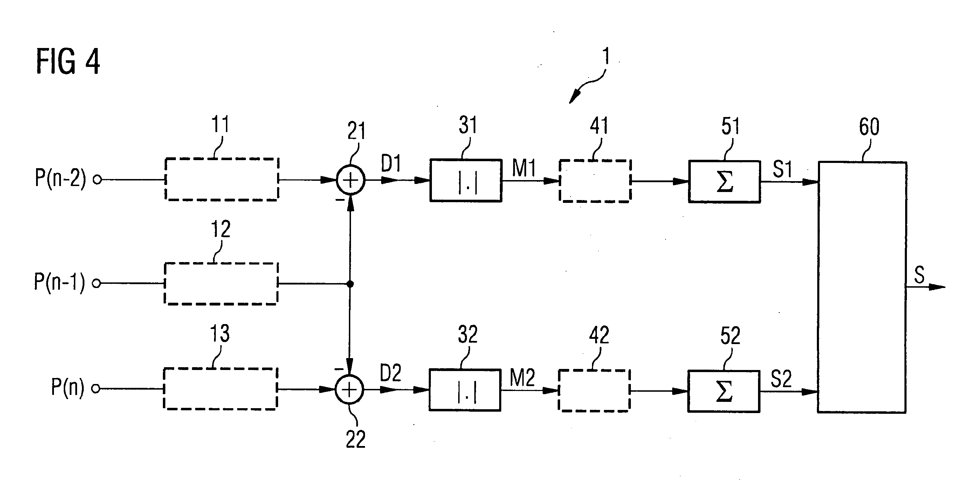

Das weitere Verfahren wird nachfolgend anhand einer zur Durchführung dieses Verfahrens geeigneten Vorrichtung erläutert, die schematisch in Figur 4 dargestellt ist. Für jede Zeilengruppe wird bei diesem Verfahren ein erstes Maß für einen Unterschied zwischen Bildinhalten der ersten und der zweiten Zeile und ein zweites Maß für einen Unterschied zwischen Bildinhalten der zweiten und der dritten Zeile gebildet. Hierzu wird bildpunktweise die Differenz zwischen Bildinformationswerten der ersten und der zweiten Zeile P(n-2), P(n-1) und bildpunktweise Differenzen zwischen Bildinformationswerten der dritten Zeile P(n) und der zweiten Zeile P(n-1) gebildet. Bei der in Figur 4 dargestellten Vorrichtung subtrahiert ein erster Subtrahierer 21 Bildinformationswerte der zweiten Zeile P(n-1) bildpunktweise von Bildinformationswerten der ersten Zeile P(n-2). Ein zweiter Subtrahierer 22 subtrahiert bildpunktweise Bildinformationswerte der zweiten Zeile P(n-1) von Bildinformationswerten der dritten Zeile P(n). Optional werden die Bildinformationswerte der einzelnen Zeilen vor der Subtraktion jeweils einer Tiefpassfilterung unterzogen. Hierzu sind Tiefpassfilter 11, 12, 13 vorhanden, denen die aufeinanderfolgenden Bildinformationswerte der einzelnen Zeilen zugeführt sind und an deren Ausgängen tiefpassgefilterte Bildinformationswerte, die durch die Subtrahierer 21, 22 weiter verarbeitet werden, zur Verfügung stehen. Mit D1 ist in Figur 4 eine am Ausgang des ersten Subtrahierers 21 zur Verfügung stehende erste Bildpunktdifferenz, und mit D2 ist eine am Ausgang des zweiten Subtrahierers 22 zur Verfügung stehende zweite Bildpunktdifferenz bezeichnet. Hierbei gilt:

$$D1 = P(n-2,k) - P(n-1,k) \qquad (1a)$$

$$D2 = P(n,k) - P(n-1,k) \qquad (1b),$$

wobei k für die Position der einzelnen Bildpunkte innerhalb der ersten, zweiten und dritten Zeile steht.

Diese Differenzen D1, D2 sind einer ersten und einer zweiten Betragsbildungseinheit 31, 32 zugeführt, die an ihrem Ausgang einen zum Betrag der jeweiligen Differenz proportionalen Wert M1, M2 zur Verfügung stellt. Es gilt also:

$$M1 \sim |D1| \qquad (2a)$$

$$M2 \sim |D2| \qquad (2b).$$

M1 und M2 stellen hierbei jeweils ein Maß für den Unterschied zwischen den beiden Bildinformationswerten dar, die zur Bildung der jeweiligen Differenz D1, D2 verwendet werden. Anstelle einer Betragsbildung kann zur Ermittlung eines Maßes für den Unterschied zweier Bildinformationswerte auch eine geradzahlige Potenz der Differenzen D1, D2 gebildet werden.

Die für die Bildpunkte der ersten und zweiten Bildzeile P(n-2), P(n-1) ermittelten Unterschiedsmaße M1 werden aufaddiert, wozu bei der Vorrichtung in Figur 4 ein erster Akkumulator dient, während die für die Bildpunkte der zweiten und dritten Bildzeile P(n-1), P(n) ermittelten Unterschiedsmaße durch einen zweiten Akkumulator 52 aufaddiert werden. Mit S1 sei nachfolgend die Summe einer Anzahl erster Unterschiedsmaße M1 und mit S2 sei die Summe einer Anzahl zweiter Unterschiedsmaße M2 bezeichnet. Betrachtet man diese beiden Summenwerte S1, S2 nur jeweils für eine Zeilengruppe, so stellt der erste Summenwert S1 ein Maß für einen Unterschied zwischen Bildinhalten der ersten und der zweiten Zeile P(n-2), P(n-1) dar, während der zweite Summenwert S2 ein Maß für einen Unterschied zwischen Bildinhalten der zweiten und der dritten Zeile P(n-1), P(n) darstellt.

Die Bildinhalte sind sich dabei umso ähnlicher, je geringer die Summenwerte S1, S2 sind. Bei identischen Bildinhalten der benachbarten Zeilen, also dann wenn den einzelnen Bildpunkten der ersten und der zweiten Zeile oder den einzelnen Bildpunkten der zweiten und der dritten Zeile gleiche Bildinformationswerte zugeordnet sind, sind diese Summenwerte S1, S2, die nachfolgend auch als Zeilenabstandsmaße bezeichnet werden, gleich Null bzw. unter Berücksichtigung von Rauscheffekten sehr klein. Mit S1(n) sei nachfolgend das Zeilenabstandsmaß für die erste und zweite Zeile P(n-2), P(n-1) der Zeilengruppe und mit S2(n) sei nachfolgend das Zeilenabstandsmaß für die zweite und dritte Zeile P(n-1), P(n) der Zeilengruppe bezeichnet. Hierbei gilt für das dargestellte Beispiel, bei dem als Maß für einen Unterschied zweier Bildpunkte der Betrag der Differenz gebildet wird:

$$S1(n) = \sum_{k} |P(n-2,k) - P(n-1,k)| \qquad (3a)$$

$$S2(n) = \sum_{k} |P(n-1,k) - P(n,k)| \qquad (3b).$$

Für die Ermittlung des Zeilenabstandsmaßes können hierbei alle Bildpunkte zweier benachbarter Zeilen miteinander verglichen werden. Darüber hinaus besteht auch die Möglichkeit, innerhalb der Zeilen Bildpunktgruppen auszuwählen. Diese Bildpunktgruppen können beliebig gewählt werden und können beispielsweise nur jeden i-ten, mit i > 1, Bildpunkt der Zeilen umfassen.

Bei Bildfolgen mit zeilenweise wiederholten Bilddaten sind die Bildinformationswerte zweier benachbarter Zeilen der anhand der Figuren 3A und 3B erläuterten Zeilengruppen identisch und besitzen damit eine maximale Korrelation, während die Korrelation zwischen den beiden anderen benachbarten Zeilen der Zeilengruppe üblicherweise geringer ist. Bei Bildern ohne zeilenweise wiederholte Daten kann davon ausgegangen werden, dass die Korrelation zwischen den Bildinformationswerten der benachbarten Zeilen innerhalb der Zeilengruppen annähernd gleich sind. Im Ergebnis bedeutet dies, dass bei Bildfolgen mit zeilenweise wiederholten Daten für eine Zeilengruppe ein signifikanter Unterschied zwischen dem ersten Zeilenabstandsmaß S1(n) und dem zweiten Zeilenabstandsmaß S2(n) besteht. Diese Zeilenabstandsmaße können somit unmittelbar zur Detektion einer Bildfolge mit zeilenweise wiederholten Daten verwendet werden. So ist bei einer Ausführungsform vorgesehen, die Differenz der beiden Zeilenabstandsmaße S1(n), S2(n) zu ermitteln und das Vorliegen einer Bildfolge mit zeilenweise wiederholten Daten anzunehmen, wenn diese Differenz größer als ein vorgegebener Schwellenwert ist. Alternativ kann der Quotient dieser Zeilenabstandsmaße ermittelt werden, und das Vorliegen einer Bildfolge mit zeilenweise wiederholten Bilddaten wird angenommen, wenn dieser Quotient um einen vorgegebenen Wert größer als 1 oder um einen vorgegebenen Wert kleiner als 1 ist. Bei Bildfolgen ohne zeilenweise wiederholten Bilddaten ist dieser Quotient hingegen annähernd 1.

Die Auswertung nur einer Zeilengruppe liefert dann kein aussagekräftiges Ergebnis, wenn die Zeilengruppe eine horizontale Grenze zwischen zwei homogenen Bereichen innerhalb des Bildes enthält. Ohne dass eine Bildfolge mit zeilenweise wiederholten Bilddaten vorliegen muss, können dann zwei benachbarte Bildzeilen der Zeilengruppe gleiche Bildinformationen enthalten, während sich die Bildinformationen der beiden anderen benachbarten Zeilen der Zeilengruppe erheblich unterscheiden können. Zur Vermeidung einer falschen Detektion ist bei einem Ausführungsbeispiel der Erfindung vorgesehen, mehrere Zeilengruppen innerhalb zweier aufeinanderfolgender Halbbilder (vlg. Figur 3A) oder innerhalb eines Vollbildes (vgl. Figur 3B) auszuwählen, die für diese Zeilengruppen ermittelten ersten Zeilenabstandsmaße aufzuaddieren und die für diese Zeilengruppen ermittelten zweiten Zeilenabstandsmaße aufzuaddieren. Diese Addition kann beispielsweise durch die Akkumulatoren 51, 52 erfolgen, wobei S1 und S2 in diesem Fall für die Summe mehrerer erster Zeilenabstandsmaße bzw. mehrerer zweiter Zeilenabstandsmaße steht. Zur Ermittlung des Vorliegens einer Bildfolge mit zeilenweise wiederholten Bilddaten werden diese Summen der Zeilenabstandsmaße entsprechend der zuvor erläuterten Zeilenabstandsmaße verarbeitet.

Die Zeilengruppen, deren Zeilenabstandsmaße addiert werden, sind für eine Vollbildfolge hierbei so auszuwählen, dass die ersten Zeilen der Zeilengruppen entweder ausschließlich geradzahlige Zeilen oder entweder ausschließlich ungeradzahlige Zeilen sind. Selbstverständlich sind die zweiten und dritten Zeilen der einzelnen Zeilengruppen hierbei so zu wählen, dass diese sich stets in derselben Bildrichtung, d. h. entweder nach oben oder nach unten, an die jeweils erste Zeile der einzelnen Zeilengruppen anschließen.

Bei einer Halbbildfolge mit zeilenweise wiederholten Bilddaten ist das Vorhandensein eines signifikanten Unterschiedes zwischen dem ersten Zeilenabstandsmaß S1, bzw. der Summe mehrerer erster Zeilenabstandsmaße, und dem zweiten Zeilenabstandsmaß S2, bzw. der Summe mehrerer zweiter Zeilenabstandsmaße, abhängig davon, ob die ersten und dritten Bildzeilen P(n-2), P(n) einer Zeilengruppe einem Halbbild mit der ersten Rasterlage A oder einem Halbbild mit der zweiten Rasterlage B entstammen. Bei Anwendung des zuvor erläuterten Verfahrens auf die in Figur 1 dargestellte Halbbildfolge, bei der Bildinformationen der Halbbilder der ersten Rasterlage A jeweils in den darauffolgenden Halbbildern der Rasterlage B wiederholt werden, ergibt sich bei Bildfolgen mit zeilenweise wiederholten Bilddaten dann ein signifikanter Unterschied zwischen dem ersten und zweiten Zeilenabstandsmaß, wenn die ersten und dritten Bildzeilen aus Halbbildern der ersten Rasterlage A und die zweiten Bildzeilen der einzelnen Zeilengruppen aus Halbbildern der zweiten Rasterlage B ausgewählt werden.

Die Summe mehrerer Zeilenabstandsmaße, die für mehrere Zeilengruppen innerhalb eines Vollbildes bzw. innerhalb zweier unmittelbar aufeinanderfolgender Halbbilder ermittelt werden, werden nachfolgend als Bildmaß bezeichnet. Ein erstes Bildmaß bezeichnet hierbei die Summe mehrerer erster Zeilenabstandsmaße, während ein zweites Bildmaß die Summe mehrerer zweiter Bildabstandsmaße bezeichnet. Hierbei gilt:

$$S1 = \sum S1(n) \qquad\qquad (4a)$$

$$S2 = \sum S2(n) \qquad\qquad (4b).$$

S1, S2 bezeichnen hierbei erste und zweite Bildmaße, S1(n), S2(n) bezeichnen, wie bereits erläutert, erste und zweite Zeilenabstandsmaße, die für eine Zeilengruppe innerhalb eines Bildes bzw. innerhalb zweier aufeinanderfolgender Halbbilder ermittelt werden.

Sofern bei Vollbildfolgen die Zeilengruppen so gewählt werden, dass die ersten und dritten Bildzeilen der Zeilengruppen entweder ausschließlich geradzahlige oder ausschließlich ungeradzahlige Zeilen sind, gilt für aufeinanderfolgende Vollbilder mit zeilenweise wiederholten Daten stets, dass ein signifikanter Unterschied zwischen dem ersten Bildmaß S1 und dem zweitem Bildmaß S2 besteht. Um zu vermeiden, dass beispielsweise aufgrund des Bildinhaltes eines Vollbildes fälschlicherweise das Vorliegen einer Bildfolge mit zeilenweise wiederholten Bilddaten angenommen wird, ist bei einer Ausführungsform der Erfindung vorgesehen, die ersten und zweiten Bildmaße S1, S2 für mehrere aufeinanderfolgende Bilder der Vollbildfolge zu vergleichen und nur dann das Vorliegen einer Bildfolge mit zeilenweise wiederholten Bilddaten anzunehmen, wenn für mehrere aufeinanderfolgende Vollbilder ein signifikanter Unterschied zwischen dem ersten und dem zweiten Bildmaß S1, S2 vorhanden ist. Ein signifikanter Unterschied liegt beispielsweise dann vor, wenn der Betrag der Differenz zwischen dem ersten und zweiten Bildmaß größer als ein vorgegebener Schwellenwert ist, oder wenn der Quotient um einen ersten Schwellenwert größer als 1 oder um einen zweiten Schwellenwert kleiner als 1 ist.

Für die Detektion einer Halbbildfolge mit zeilenweise wiederholten Bilddaten ist bei einem Ausführungsbeispiel des Verfahrens vorgesehen, für eine Anzahl aufeinanderfolgender Halbbilder erste und zweite Bildabstandsmaße für jedes Halbbild zu ermitteln. Bei Halbbildfolgen mit zeilenweise wiederholten Bilddaten weisen die ersten und zweiten Bildabstandsmaße S1, S2 für jedes zweite Halbbild einen signifikanten Unterschied auf, nämlich dann, wenn die ersten und dritten Zeilen der Zeilengruppe einem Halbbild der ersten Rasterlage A entstammen, während für die übrigen Halbbilder kein signifikanter Unterschied zwischen den Bildabstandsmaßen besteht, nämlich dann wenn die ersten und dritten Zeilen der Zeilengruppe Halbbildern der zweiten Rasterlage B entstammen. Bei einem solchen periodischen Wechsels zwischen dem Bestehen und dem Nicht-Bestehen eines signifikanten Unterschieds kann bei Halbbildfolgen auf das Vorliegen einer Halbbildfolge mit zeilenweise wiederholten Bilddaten geschlossen werden.

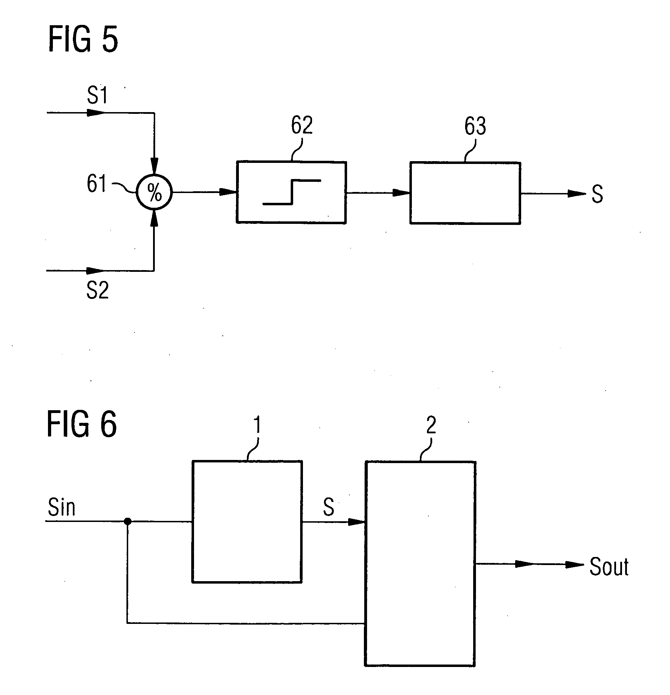

Die zuvor erläuterte Auswertung der am Ausgang der Akkumulatoren 51, 52 zur Verfügung stehenden Zeilen- oder Bildabstandsmaße S1, S2 erfolgt Bezug nehmend auf Figur 4 durch eine Auswerteeinheit 60, der die ersten und zweiten Zeilen- oder Bildabstandsmaße S1, S2 zugeführt sind. Ein Ausführungsbeispiel dieser Auswerteschaltung ist in Figur 5 dargestellt.

Die dargestellte Auswerteschaltung weist einen Dividierer 61 auf, dem das erste und zweite Bildabstandsmaß S1, S2 zugeführt sind und der den Quotienten dieser beiden Bildabstandsmaße bildet. Sofern ein signifikanter Unterschied zwischen diesen beiden Bildabstandsmaßen besteht, ist dieser Quotient entweder signifikant größer als 1 oder signifikant kleiner als 1. Ob dieser Quotient größer oder kleiner als 1 ist, ist bei einer Vollbildfolge mit zeilenweise wiederholten Bilddaten abhängig davon, ob die ersten Bildzeilen der einzelnen Zeilengruppen geradzahlige oder ungeradzahlige Zeilen sind.

Dem Dividierer 61 ist bei der in Figur 5 dargestellten Auswerteschaltung ein Schwellenwertentscheider 62 nachgeschaltet, der ermittelt, ob der Quotient zwischen dem ersten und zweiten Bildabstandsmaß S1, S2 oberhalb oder unterhalb eines vorgegebenen Schwellenwertes liegt. Ausgangssignale dieses Schwellenwertentscheiders 62 sind einer Mustererkennungseinheit 63 nachgeschaltet. Diese Mustererkennungseinheit wertet die am Ausgang des Schwellenwertentscheiders anliegenden Werte für eine Folge aufeinanderfolgender Halbbilder bzw. Vollbilder aus. Liegen die Quotienten zwischen dem ersten und dem zweiten Bildabstandsmaß S1, S2 bei einer Vollbildfolge für eine Anzahl aufeinanderfolgender Vollbilder oberhalb eines vorgegebenen Schwellenwertes oder unterhalb eines vorgegebenen Schwellenwertes, also außerhalb eines durch diese Schwellenwerte vorgegebenen Fensters, so wird das Vorliegen einer Bildfolge mit zeilenweise wiederholten Bilddaten angenommen, was durch ein am Ausgang der Mustererkennungseinheit 63 anliegendes Detektorsignal S1 angezeigt wird.

Wechselt das Ausgangssignal des Schwellwertdetektors 62 bei einer Halbbildfolge mit zeilenweise wiederholten Bilddaten periodisch zwischen einem einen signifikanten Unterschied zwischen dem ersten und zweiten Bildabstandsmaß anzeigenden Wert und einem keinen signifikanten Unterschied anzeigenden Wert, so wird vom Vorliegen einer Halbbildfolge mit zeilenweise wiederholten Bilddaten ausgegangen, was durch das Detektorsignal S angezeigt wird.

Der Schwellenwertdetektor 62 kann insbesondere ein Fensterkomparator sein, der einen vorgegebenen Signalpegel, beispielsweise einen High-Pegel dann annimmt, wenn das Eingangssignal oberhalb eines ersten Schwellenwertes oder unterhalb eines zweiten Schwellenwertes liegt. Der obere Schwellenwert ist hierbei signifikant größer als 1 und der untere Schwellenwert signifikant kleiner als 1 gewählt.

Anstelle einer Differenz der ersten und zweiten Bildabstandsmaße wird bei der in Figur 5 dargestellten Auswerteschaltung der Quotient dieser Bildabstandsmaße gebildet. Die Absolutwerte der für die Detektion verwendeten Bildpunkte bzw. deren Bildinformationswerte haben in diesem Fall nur einen vernachlässigbaren Einfluss auf die Schwellenwertentscheidung.

Optional besteht bei dem zuvor erläuterten Verfahren die Möglichkeit, die Bildpunktabstandsmaße M1, M2 vor dem Aufsummieren gemäß einer Coring-Kennlinie auf modifizierte Bildpunktabstandsmaße abzubilden, was bei der in Figur 4 dargestellten Vorrichtung durch Coring-Einheiten erfolgt, die den Akkumulatoren vorgeschaltet sind. Hierbei werden die Bildpunktabstandsmaße um einen vorgegebenen konstanten Wert reduziert und Bildpunktabstandsmaße kleiner oder gleich diesem Wert werden zu Null gesetzt. Dadurch lässt sich die Rauschempfindlichkeit der Detektion verringern.

Die anhand des zuvor erläuterten Verfahrens gewonnene Information, ob ein Bildsignal mit zeilenweise wiederholten Bilddaten vorliegt, kann für eine adaptive Filterung des Bildsignals genutzt werden, mit dem Ziel die durch einen zeilenweise Wiederholung der Bilddaten hervorgerufenen Artefakte zu reduzieren. Figur 6 veranschaulicht eine Bildverarbeitungsvorrichtung, bei dem ein Bildsignal einem anhand von Figur 4 erläuterten Detektor 1 zugeführt ist, an dessen Ausgang ein Detektorsignal S zur Verfügung steht, das eine Information über das Vorliegen eines Bildsignals mit zeilenweise wiederholten Bilddaten enthält. Dieses Detektorsignal S ist zusammen mit dem Bildsignal einer nachgeschalteten Filteranordnung 2 zugeführt, die das Bildsignal abhängig von dem Detektorsignal filtert. Dieses Filter ist beispielsweise ein vertikales Tiefpassfilter, das die Bildinformationswerte der in vertikaler Richtung einem Bild benachbart angeordneten Bildpunkte einer Tiefpassfilterung unterzieht. Selbstverständlich kann dieses Filter ein beliebiges anderes Filter zur Reduktion der durch das zeilenweise Wiederholen von Bilddaten hervorgerufenen Artefakte sein. Dieses Filter kann insbesondere dazu ausgebildet sein, eine bewegungskompensierte Filterung bzw. Interpolation durchzuführen. Das der Vorrichtung in Figur 6 zugeführte Bildsignal ist mit Sin, das am Ausgang der Filteranordnung 2 zur Verfügung stehende Bildsignal ist mit Sout bezeichnet. Die Auswahl einzelner Zeilengruppen zur Ermittlung des Detektionssignals durch den Detektor 1 erfolgt in nicht näher dargestellter Weise entweder innerhalb des Detektors (in Figur 5 nicht dargestellt) oder in einer dem Detektor vorgeschalteten Auswahleinheit (nicht dargestellt).

**Patentansprüche**

1. Verfahren zur Detektion eines Bildsignals, das eine Halbbildsequenz mit zeilenweise aufgebauten Halbbildern repräsentiert und das zeilenweise wiederholte Bilddaten aufweist, wobei das Verfahren für mehrere aufeinanderfolge Halbbilder mit einer ersten Rasterlage jeweils die Verfahrensschritte aufweist:

   Auswählen mehrerer Zeilengruppen mit jeweils einer ersten, und einer dritten Zeile, die in einer vorgegebenen Bildrichtung unmittelbar aufeinanderfolgend in einem ersten Halbbild angeordnet sind, und mit jeweils einer zweiten Zeile, die in einem zeitlich unmittelbar benachbarten Halbbild an einer Position zwischen der ersten und dritten Zeile angeordnet ist,
   für jede Zeilengruppe: Ermitteln eines ersten Zeilenabstandsmaßes für einen Unterschied zwischen Bildinhalten der ersten und der zweiten Zeile und eines zweiten Zeilenabstandsmaßes für einen Unterschied zwischen Bildinhalten der zweiten und der dritten Zeile,
   Auswerten des ersten und des zweiten Zeilenabstandsmaßes im Hinblick auf das Vorliegen eines signifikanten Unterschieds zwischen diesen Zeilenabstandsmaßen.

2. Verfahren nach Anspruch 1, bei dem erste und zweite Zeilenabstandsmaße für mehrere Zeilengruppen in zwei aufeinanderfolgenden Halbbildern ermittelt werden, bei dem eine erste Summe erster Zeilenabstandsmaße gebildet wird und eine zweite Summe zweiter Zeilenabstandsmaße gebildet wird, und bei dem die erste und die zweite Summe im Hinblick auf das Vorliegen eines signifikanten Unterschieds zwischen diesen Summen ausgewertet werden.

3. Verfahren nach Anspruch 2, bei dem erste und zweite Summen von Zeilenabstandsmaßen für mehrere aufeinanderfolgende Gruppen mit jeweils zwei Halbbildern ermittelt werden, bei dem für jede Halbbildgruppe das Vorliegen eines signifikanten Unterschieds ermittelt wird, und bei dem das Vorliegen einer Bildfolge mit zeilenweise wiederholten Bilddaten dann angenommen wird, wenn abwechselnd ein signifikanter und kein signifikanter Unterschied vorliegt.

**4.** Verfahren zur Detektion eines Bildsignalen, das eine Bildsequenz mit zeilenweise aufgebauten Bildern repräsentiert und das zeilenweise wiederholte Bilddaten aufweist, wobei das Verfahren für mehrere aufeinanderfolge Bilder der Bildsequenz jeweils die Verfahrensschritte aufweist:

Auswählen mehrerer Zeilengruppen mit jeweils einer ersten, einer zweiten und einer dritten Zeile, die in einer vorgegebenen Bildrichtung unmittelbar aufeinanderfolgend angeordnet sind,
für jede Zeilengruppe: Ermitteln eines ersten Zeilenabstandsmaßes für einen Unterschied zwischen Bildinhalten der ersten und der zweiten Zeile und eines zweiten Zeilenabstandsmaßes für einen Unterschied zwischen Bildinhalten der zweiten und der dritten Zeile,
Auswerten des ersten und des zweiten Zeilenabstandsmaßes im Hinblick auf das Vorliegen eines signifikanten Unterschieds zwischen diesen Zeilenabstandsmaßen.

**5.** Verfahren nach Anspruch 4, bei dem erste und zweite Zeilenabstandsmaße für mehrere Zeilengruppen in einem Vollbild ermittelt werden, bei dem eine erste Summe erster Zeilenabstandsmaße gebildet wird und eine zweite Summe zweiter Zeilenabstandsmaße gebildet wird, und bei dem die erste und die zweite Summe im Hinblick auf das Vorliegen eines signifikanten Unterschieds zwischen diesen Summen ausgewertet werden.

**6.** Verfahren nach Anspruch 5, bei dem erste und zweite Summen von Zeilenabstandsmaßen für mehrere aufeinanderfolgende Bilder ermittelt werden, bei dem für jedes Bild das Vorliegen eines signifikanten Unterschieds ermittelt wird, und bei dem das Vorliegen einer Bildfolge mit zeilenweise wiederholten Bilddaten dann angenommen wird, wenn für eine vorgegebene Anzahl aufeinanderfolgender Bilder jeweils ein signifikanter Unterschied vorliegt.

**7.** Verfahren nach einem der Ansprüche 4 bis 6, bei dem die ersten Zeilen jeweils nur geradzahlige Zeilen sind oder jeweils nur ungeradzahlige Zeilen sind.

**8.** Verfahren nach einem der vorangehenden Ansprüche, bei dem für jedes Bild ein Quotient zwischen dem ersten und zweiten Zeilenabstandsmaß oder zwischen der Summe der ersten Zeilenabstandsmaße und der Summe der zweiten Zeilenabstandsmaße gebildet wird und bei dem ein signifikanter Unterschied dann vorliegt, wenn dieser Quotient oberhalb eines ersten vorgegebenen Schwellenwertes oder unterhalb eines zweiten vorgegebenen Schwellenwertes liegt.

**9.** Verfahren nach einem der vorangehenden Ansprüche, bei dem die Ermittlung des ersten und des zweiten Zeilenabstandsmaßes die Verfahrensschritte aufweist:

Auswählen mehrerer Gruppen von Bildpunkten, die jeweils einen ersten Bildpunkt in der ersten Zeile, einen zweiten Bildpunkt in der zweiten Zeile und einen dritten Bildpunkt in der dritten Zeile an jeweils gleichen Positionen innerhalb der Zeilen aufweisen,
für jede der Gruppen: Berechnen eines Maßes für eine Differenz zwischen einem dem ersten Bildpunkt zugeordneten Bildinformationswert und einem dem zweiten Bildpunkt zugeordneten Bildinformationswert und eines zweiten Maßes für eine Differenz zwischen dem dem zweiten Bildpunkt zugeordneten Bildinformationswert und einem dem dritten Bildpunkt zugeordneten Bildinformationswert,
Aufaddieren der Maße für die Differenzen zwischen den ersten und zweiten Bildpunkten der Gruppen, wobei eine **dadurch** erhaltene Summe das erste Maß repräsentiert,
Aufaddieren der Maße für die Differenzen zwischen den zweiten und dritten Bildpunkten der Gruppen, wobei eine **dadurch** erhaltene Summe das zweite Maß repräsentiert.

**10.** Verfahren nach Anspruch 9, bei dem die Berechnung der Ma-ße für die Differenzen der Bildinformationswerte die Bildung eines Absolutbetrages dieser Differenzen umfasst.

**11.** Verfahren nach Anspruch 9, bei dem die Berechnung der Maße für die Differenzen der Bildinformationswerte die Bildung geradzahliger Potenzen dieser Differenzen umfasst.

**12.** Verfahren nach einem der vorangehenden Ansprüche, bei dem auf die Bildinformationswerte der Bildpunkte wenigstens einer der ersten, zweiten und dritten Zeilen vor der Ermittlung der ersten und zweiten Maße eine Tiefpassfilterung angewendet wird.

**13.** Verfahren nach einem der Ansprüche 9 bis 13, bei dem die Bildpunktdifferenzen vor der Addition gemäß einer Coring-Kennlinie auf modifizierte Bildpunktdifferenzen abgebildet werden.

## FIG 1

| 1.1 | | 2.1 | |
|---|---|---|---|
| | 1.1 | | 2.1 |
| 1.2 | | 2.2 | |
| | 1.2 | | 2.2 |
| 1.3 | | 2.3 | |
| | 1.3 | | 2.3 |
| 1.4 | | 2.4 | |
| | 1.4 | | 2.4 |
| A | B | A | B |

t →

## FIG 2

| 1.1 | 2.1 |
|---|---|
| 1.1 | 2.1 |
| 1.2 | 2.2 |
| 1.2 | 2.2 |
| 1.3 | 2.3 |
| 1.3 | 2.3 |
| 1.4 | 2.4 |
| 1.4 | 2.4 |

t →

## FIG 3A

P(n-2,k)

P(n-2)

P(n-1)

P(n-1,k)

P(n)

P(n,k)

## FIG 3B

P(n-2,k)

P(n-2)

P(n-1,k)

P(n-1)

P(n)

P(n,k)

FIG 4

EP 1 978 733 A2

FIG 5

S1

61 %

62

63

S

S2

FIG 6

1

2

Sin

S

Sout